# EUROPÄISCHE PATENTSCHRIFT

(11) **EP 1 479 507 B1**
(45) Veröffentlichungstag und Bekanntmachung des Hinweises auf die Patenterteilung: **13.07.2005**
(21) Anmeldenummer: 03011613.1
(22) Anmeldetag: 22.05.2003
(51) Int. Cl.: B29C 65/16

(54) **Verfahren und Vorrichtung zum Maskenschweissen von bewegten Kunststofffolien mittels Laserstrahlen**
Process and device for welding through a mask moving plastic sheets with laser beams
Procédé et dispositif pour souder au travers d'un masque des feuilles de plastiques en mouvement à l'aide de rayons laser

(43) Veröffentlichungstag der Anmeldung: 24.11.2004
(73) Patentinhaber: Leister Process Technologies, 6060 Sarnen (CH)
(72) Erfinder: Chen, Jie-Wei, ch-6055 Alpnach Dorf (CH)
(74) Vertreter: Klocke, Peter, Dipl.-Ing.

(56) Entgegenhaltungen:
- US-A1- 2001 019 045

## Beschreibung

Die vorliegende Erfindung betrifft ein Verfahren und eine Vorrichtung zum Maskenschweißen von bewegten Kunststofffolien mittels Laserstrahlen, bei dem eine transparente Folie von dem Laserstrahl durchdrungen und mit einer absorbierenden Folie an definierten Stellen verbunden wird.

Es ist bekannt, Kunststoffmaterialien mittels Laserstrahlen zu verbinden, in dem das dem Laserstrahl zugewandte obere Material von diesem durchstrahlt und an der Kontaktfläche zwischen dem oberen für den Laserstrahl transparenten und dem unteren für den Laserstrahl undurchlässigen Material die beiden Materialien erwärmt und unter Druck miteinander verbunden werden. Das für den Laserstrahl transparente Material kann optisch im sichtbaren Wellenlängenbereich schwarz sein. Es ist außerdem bekannt, hierzu einen linienförmigen Laserstrahl zu erzeugen, wobei während des Schweißvorganges eine Relativbewegung zwischen den Materialien und dem Laserstrahl stattfindet, um die gewünschte Schweißkontur zu erzeugen.

Voraussetzung für den Schweißprozess gemäß dieser Durchstrahltechnik ist der Wärmeantwort des Kunststoffs unter IR-Bestrahlung. Der mit IR-absorbierenden Stoffen pigmentierte Kunststoff nimmt die Wärmeenergie aus der IR-Quelle (Laserquelle) unter Bestrahlung auf und erwärmt sich. Die Anhäufung der Wärmeenergie und damit erreichte Temperatur im Kunststoff sind abhängig von der Dosierungsweise der Energie, wie z. B. Energiedichte und Bestrahlungszeit. Außerdem ist auch die Materialeigenschaft, wie z. B. die Wärmeleitfähigkeit von Bedeutung. Der entscheidende Schritt für den Schweißprozess ist der Phasenübergang zwischen dem Festkörperzustand in den Verflüssigungszustand, der im nachfolgenden auch als Schmelztemperatur bezeichnet wird. Um diese Schmelztemperatur zu erreichen, wird aufgrund der niedrigen Wärmeleitfähigkeit des Kunststoffes eine gewisse Erwärmungszeit benötigt. Grundsätzlich ist es möglich, mit einer entsprechend höheren Energiedosis eine Verkürzung der Bestrahlungszeit zu realisieren. Diese Maßnahme verkleinert jedoch das Prozessfenster wodurch die Schweißqualität verschlechtert werden kann.

Endloses Folienmaterial kann beispielsweise als Teil eines mikromechanischen Bauteils, Sensoren, Aktuatoren etc., verwendet werden, wobei das Folienmaterial gleichzeitig auch Transportmittel für das Bauteil ist. Auch kann endloses Folienmaterial zur Verpackung von derartigen auf einer Folie transportierten Bauteilen oder anderen zu verpackenden Gegenständen verwendet werden. Zur Herstellung von derartigen verschweißten Endlosfolien ist es wichtig, einen möglichst genauen aber auch schnellen Schweißvorgang zu realisieren.

In der mitanhängigen Europäischen Patentanmeldung 02 011 925.2 (EP-A-1 366 890) vom 16.05.2002 ist ein Verfahren und eine Vorrichtung angegeben, bei der die hohe Schweißgeschwindigkeit für endlose Kunststofffolien dadurch erzielt werden kann, dass der Vorerwärmungsprozess des Kunststoffes durch spezielle Anordnung des Strahlenformers integriert wird. Dies erfolgt dort durch zwei gegenläufige gegeneinander pressende Rollen, wobei die erste Rolle aus einem Laserstrahl durchlässigen Material und rohrformig ausgebildet ist, und die zweite Rolle aus einem an der Oberfläche leicht deformierbaren Material ausgebildet ist. Zusätzlich sind in der ersten Rolle Einrichtungen zur Erzeugung mindestens eines Laserstrahls an der Kontaktfläche vorgesehen. Die gewünschte Schweißgeschwindigkeit kann dort durch die Anpassung des Strahlenformers erreicht werden. Zusätzlich kann die gewünschte Schweißnahtstruktur durch Verwendung einer Maske, die in einer der Rollen integriert ist, realisiert werden. Eine derartige Vorrichtung ist nur für den Fall funktionsfähig, wenn eine präzise Position der Schweißstrukturen auf der Folie nicht gefordert ist.

Wenn jedoch die Schweißnahtstrukturen nur in gewissen wohl definierten Positionen auf der Folie, beispielsweise bis auf 20 µm genau, präzise aufgebracht werden sollen, muss die Maske während des Schweißprozesses entsprechend justiert werden. Diese Justierung muss ständig auf dynamische Weise durchgeführt werden und sollte völlig von dem Folientransportsystem abgelöst sein, damit die Hochgeschwindigkeitsschweißung von dem Justageprozess unbeeinflusst und zügig weiter ohne Unterbrechung durchgeführt werden kann.

Der vorliegenden Erfindung liegt daher die Aufgabe zugrunde, eine Möglichkeit vorzuschlagen, mit der Schweißnahtstrukturen in wohldefinierten Positionen im µm-Bereich auf schnell laufende Kunststofffolien aufgebracht werden können.

Diese Aufgabe wird erfindungsgemäß durch ein Verfahren mit den Merkmalen des Verfahrensanspruchs sowie durch eine Vorrichtung mit den Merkmalen des unabhängigen Vorrichtungsanspruchs gelöst. Weitere vorteilhaftige Ausgestaltungen sind den jeweiligen rückbezogenen Unteransprüchen zu entnehmen.

Gemäß der Erfindung wird der Lasterstrahl in einer Schweißzone, in der die Kunststofffolien miteinander verbunden werden, durch eine sich mit den Folien synchron mitbewegte Maske hindurch auf die Folien gebracht. Als Schweißzone wird im nachfolgenden der Bereich verstanden, in dem der linienförmige Laserstrahl auf die Folie trifft. In diese Schweißzone erfolgt gleichzeitig ein Zusammenpressen der Folien. Dies ermöglicht eine dynamische Anpassung der Maske auf die zu schweißenden Strukturen.

Gemäß einer bevorzugten Ausbildung des Verfahrens wird die Maske von der transparenten Folie beabstandet angeordnet und die Geschwindigkeit der Maske mittels eines separaten Antriebs eingestellt. Dadurch wird der dynamischen Maskenjustierung besonders Rechnung getragen, da dies eine Online-Positionskorrektur während eines ununterbrochenen Folienschweißprozesses gestattet. Die Produktion kann mit hohem Durchsatz bei gleichzeitig hoher Präzision der Maskenabdeckung mit wohldefinierten Schweißnähten gewährleistet werden.

Gemäß einer weiteren Ausbildung des Verfahrens wird die Maske mittels Erkennungsmarken auf einer Folie und einem Maskenträger vor Erreichen der Schweißzone auf die Foliengeschwindigkeit synchronisiert. Hierzu gibt es verschiedene Möglichkeiten. Dies kann beispielsweise durch optische Erfassung der Erkennungsmarken und entsprechender Auswertung in einem Rechner mit anschließender Regelung der Geschwindigkeit der Maske realisiert werden.

Vorzugsweise wird der Laserstrahl im Bereich der Schweißzone durch einen Umfangsabschnitt einer um eine Achse sich drehenden Maskenrolle auf die Folien aufgebracht. Dies hat den Vorteil, dass die Unterbringung einer entsprechenden Vorrichtung auf möglichst engem Raum erfolgen kann.

Nach der Durchdringung der Maske wird der Laserstrahl durch eine mit Foliengeschwindigkeit umlaufende transparente Anpressrolle auf die Folien gebracht. Hierbei kann es sich um eine Anpressrolle handeln, die eine eigene Drehachse aufweist oder deren Drehachse der Drehachse der Maskenrolle entspricht. Bei verschiedenen Drehachsen ist es möglich, dass die Maskenrolle und die Anpressrolle gegenläufig drehen und sich am Umfang berühren oder auch nicht. Die bevorzugte Ausgestaltung des erfindungsgemäßen Verfahrens hinsichtlich der transparenten Anpressrolle erfolgt jedoch derart, dass der Laserstrahl durch eine um die Maskenrolle angeordnete Anpressrolle auf die Folien gebracht wird. Dies kann durch eine Anpressrolle mit gleicher oder verschiedener Drehachse durchgeführt werden. Vorzugsweise wird die optisch transparente Anpressrolle passiv durch die Bewegung der Folie angetrieben, während die Maskenrolle von einem eigenen Antriebssystem gesteuert wird. Dadurch kann die Drehung dieser Rolle sowohl mit der Anpressrolle als auch mit der laufenden Kunststofffolie hundertprozentig synchronisiert werden. Auf diese Art und Weise erhält man eine mit der ständig bewegenden Kunststofffolien synchronisierte und mitlaufende Maske. Die relative Position der Maskenstrukturen gegenüber der Kunststofffolie wird durch die Anpassung der Drehgeschwindigkeit der Maskenrolle bestimmt.

Bei der erfindungsgemäß ausgestalteten Vorrichtung ist die Maske auf einer sich um die Längsachse drehende Maskenrolle angeordnet, deren Geschwindigkeit auf die Foliengeschwindigkeit synchronisierbar ist.

Des Weiteren ist vorzugsweise die Maskenrolle in einer der Anpressrollen angeordnet, wobei die beiden Drehachsen parallel zueinander oder gleich sind, und der Umfang der Maskenrolle zumindest im Bereich der Schweißzone mit geringstem Abstand zu dem inneren Umfang der die Maskenrolle umgebenden für die Laserstrahlen transparenten Anpressrolle angeordnet ist. Der geringste Abstand muss zumindest in dem Bereich der Schweißzone vorgesehen sein, um die erforderliche Genauigkeit bei der Übertragung der Maske auf die Folie zu gewährleisten. Die Distanz kann dabei zumindest in diesem Bereich kleiner als 1 mm sein. Inwiefern der Abstand im übrigen Bereich von diesem Wert abweicht, hängt von der Anordnung der Anpressrolle relativ zu der Maskenrolle ab.

In einer weiteren Ausbildung weist die Maskenrolle Erkennungsmarken zur optischen Erkennung der Geschwindigkeit auf, und eine Steuereinrichtung stellt die Drehgeschwindigkeit der Maskenrolle in Abhängigkeit von dem Vergleich mit der Geschwindigkeit der Folien ein. Grundsätzlich kann die Foliengeschwindigkeit ebenfalls über Erkennungsmarken aber auch allein durch die Drehgeschwindigkeit von Antriebsrollen ermittelt werden.

Das erfindungsgemäße Verfahren und die erfindungsgemäße Vorrichtung beschreiben ein dynamisches Maskenjustierverfahren zur Verschweißung von endlosen Folien mit einer relativ einfach in einer Vorrichtung zu integrierenden Vorrichtung, die bei Bedarf ein- bzw. abgeschaltet werden kann. Das Verfahren ist Online, das heißt, direkt steuerbar in einem eindimensionalen Hochgeschwindigkeitsprozess einsetzbar. Die Justierungseinheit ist völlig von dem Folientransportmechanismus abgelöst und beeinflusst den Schweißprozess, und dabei vor allem die Geschwindigkeit, nicht. Es erlaubt hohe Foliengeschwindigkeiten, wobei in Versuchen bereits Foliengeschwindigkeiten von 800 mm pro Sekunde erreicht wurden. Höhere Geschwindigkeiten bis zu mindestens 1000 mm pro Sekunde erscheinen realisierbar.

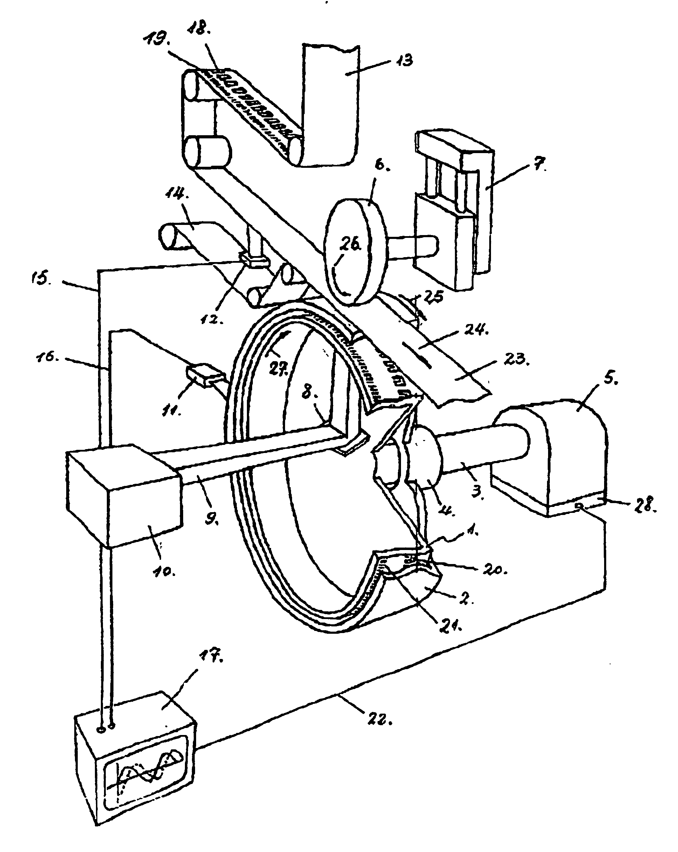

Nachfolgend wird die Erfindung anhand eines Ausführungsbeispiels in Verbindung mit der einzigen Figur näher erläutert. Diese zeigt den prinzipiellen Aufbau einer erfindungsgemäßen Anordnung.

Auf einer sich um die Antriebsachse 3 drehenden Maskenrolle 1, die transparent ausgebildet ist, befinden sich Maskenstrukturen 20 sowie Erkennungsmarken 21 in Form von dünnen Strichen. Um die Maskenrolle 1 ist eine transparente Anpressrolle 2 angeordnet, die über die Rollenlagerung 4 passiv durch die Bewegung der miteinander zu verschweißenden Folien 13 und 14 bewegt wird. Die Maskenrolle 1 wird über die Antriebsachse 3 mittels einer Antriebseinrichtung 5 gedreht.

In dem Ausführungsbeispiel ist die Folie 13 als absorbierende Folie und die Folie 14 als transparente Folie ausgebildet, die vor einer in vertikaler Richtung bewegbaren und beispielsweise mittels eines Anpresszylinders 7 mit Druck gegen die zusammengefügten Folien 23 und die Anpressrolle 2 gepresst werden kann. Die Drehrichtung 26 der nicht transparenten Anpressrolle 6 und die Drehrichtungen 25, 27 der gleichdrehenden Anpressrolle 2 bzw. der Maskenrolle 1 sind gegenläufig. Die Anpressrolle 6 wird ebenfalls passiv angetrieben und weist eine weiche Andrückoberfläche auf, um während des Schweißvorgangs in der Schweißzone eine für die Folien längere Anpresszone bereit zu stellen. Die Bewegungsrichtung der zusammengefügten Folien 23 ist durch den Pfeil 24 angegeben.

Auf der Unterseite der absorbierenden Folie 13 können sich beispielsweise Strukturen, wie ein metallischer Film befinden. Zusätzlich weist sie am Rand Erkennungsmarken 19, beispielsweise dünne Striche auf. Diese Erkennungsmarken werden mittels einer optischen Detektiereinrichtung erkannt und über die Leitung 15 einer Signalverarbeitungseinheit 17 zugeführt. Entsprechend werden mittels einer optischen Erkennungseinrichtung 11 die Markierungen 21 auf der Maskenrolle 1 gelesen und über die Leitung 16 ebenfalls der Signalverarbeitungseinheit 17 zugeführt. Die Signalverarbeitungseinheit 17 liefert entsprechende Signale über die Leitung 22 an die Antriebssteuerung 28.

Die Schweißung wird mittels eines Laserstrahls 9 von einer Laserquelle 10 realisiert, wobei in der Maskenrolle 1 ein Umlenkspiegel 8 angeordnet ist, um den Laserstrahl auf die gewünschte Stelle zu fokussieren. Grundsätzlich ist es auch möglich, sofern es erforderlich ist den Laserstrahl durch eine bewegte Umlenkeinrichtung über einen gewissen Bereich auf der Folie zu bewegen.

Für die Synchronisation zwischen der Maskenrolle 1 und der zu verschweißenden Kunststofffolien 13, 14 kann durch die Erfassung der Ist-Position der Kunststofffolie 13 kurz vor der Schweißzone und der Ist-Position der Maske 20 erzielt werden. Hierfür werden gewisse identische Erkennungsmarken 19, 21 sowohl auf der Kunststofffolie 13 als auch auf der Maskenrolle 2 mit klar definierter Periode aufgebracht. Dies erfolgt in dem Ausführungsbeispiel durch dünne Striche. Andere dem Fachmann geläufige Markierungen sind möglich. Die Geometrie dieser dünnen Striche wird durch die Anforderung der Justagepräzision und der gewünschten maximalen Schweißgeschwindigkeit bestimmt.

Die relativen Positionsbeziehungen zwischen der Erkennungsmarke 19 und der Nutzstruktur 18 auf der Folie 13 sind fest definiert. Diese Erkennungsmarken können durch die optischen Detektoren 11 und 12, beispielsweise Lichtschranken, schnell und hoch präzise erfasst werden. Durch den Vergleich der Messsignale kann die Information über die relative Position zwischen Maske 20 und Folie 13 ermittelt und zur Steuerung der Drehgeschwindigkeit der Maskenrolle 1 verwendet werden. Die Justierung ist in diesem Sinne die ständige Korrektur des Ersatzes der Maskenrollenposition. Das Schweißergebnis kann durch ein Kamerasystem nach der Schweißung kontrolliert werden.

## Patentansprüche

1. Verfahren zum Maskenschweißen von bewegten Kunststofffolien (13, 14) mittels Laserstrahlen (9), bei dem eine transparente Folie (14) von dem Laserstrahl (9) durchdrungen und mit einer absorbierenden Folie (13) an definierten Stellen verbunden wird, in dem der Laserstrahl (9) in einer Schweißzone durch eine sich mit den Folien (13, 14) synchron mitbewegten Maske (20) hindurch auf die Folien (13, 14) gebracht wird, die Maske (20) von der transparenten Folie (14) beabstandet angeordnet und die Geschwindigkeit der Maske (20) mittels eines separaten Antriebs (5) eingestellt wird.

2. Verfahren nach Anspruch 1, **dadurch gekennzeichnet, dass** die Maske (20) mittels Erkennungsmarken (19, 21) auf einer Folie (13) und einem Maskenträger (1) vor Erreichen der Schweißzone synchronisiert wird.

3. Verfahren nach einem der vorangegangenen Ansprüche, **dadurch gekennzeichnet, dass** der Laserstrahl (9) im Bereich der Schweißzone durch einen Umfangsabschnitt einer sich um eine Achse (3) drehenden, vorzugsweise aktiv angetriebenen, Maskenrolle (1) auf die Folien (13, 14) gebracht wird.

4. Verfahren nach Anspruch 3, **dadurch gekennzeichnet, dass** der Laserstrahl (9) nach der Maske (20) durch eine mit Foliengeschwindigkeit umlaufende transparente, vorzugsweise passiv angetriebene Anpressrolle (2) auf die Folien (13, 14) gebracht wird.

5. Verfahren nach Anspruch 4, **dadurch gekennzeichnet, dass** der Laserstrahl (9) durch eine um die Maskenrolle (1) angeordnete Anpressrolle (2) auf die Folien (13, 14) gebracht wird.

6. Verfahren nach Anspruch 2, **dadurch gekennzeichnet, dass** die Synchronisation der Maskengeschwindigkeit mit der Foliengeschwindigkeit durch Vergleich der Erkennungsmarken (19, 21) und entsprechender Regelung der Geschwindigkeit der Masken (20) durchgeführt wird.

7. Vorrichtung zum Maskenschweißen von bewegten Kunststofffolien mittels Laserstrahlen mit einer Lasereinrichtung (10) sowie Einrichtungen zum Zuführen der Folien (13, 14) in eine Schweißzone, mindestens einer oberen Anpressrolle (6) und einer unteren Anpressrolle (2) zum Zusammenpressen der Folien (13, 14) mindestens in der Schweißzone, **dadurch gekennzeichnet, dass** die Maske (20) auf eine sich um die Längsachse (3) drehenden Maskenrolle (1) angeordnet ist, deren Geschwindigkeit auf die Foliengeschwindigkeit synchronisierbar ist.

8. Vorrichtung nach Anspruch 7, **dadurch gekennzeichnet, dass** die Maskenrolle (1) in einer der Anpressrollen (2, 6) angeordnet ist, wobei die beiden Drehachsen (3, 4) parallel zueinander oder gleich sind, und der Umfang der Maskenrolle (1) zumindest im Bereich der Schweißzone mit geringstem Abstand zu dem inneren Umfang der die Maskenrolle (1) umgebenden, für die Laserstrahlen transparenten Anpressrolle (2) angeordnet ist.

9. Vorrichtung nach Anspruch 8, **dadurch gekennzeichnet, dass** die Maskenrolle (1) Erkennungsmarken (21) zur optischen Erkennung der Geschwindigkeit aufweist, und eine Steuereinrichtung (28) die Drehgeschwindigkeit der Maskenrolle (1) in Abhängigkeit von dem Vergleich der Geschwindigkeit der Folien (13, 14) einstellt.

## Claims

1. A method for the mask welding of moved plastic films (13, 14) by means of laser beams (9), in which a transparent film (14) is penetrated by the laser beam (9) and is connected to an absorbent film (13) at defined locations, in that the laser beam (9) is applied to the films (13, 14) in a welding zone through a mask (20) comoved in synchronism with the films (13, 14), the mask (20) is arranged so as to be spaced apart from the transparent film (14) and the speed of the mask (20) is set by means of a separate drive (5).

2. The method as claimed in claim 1, wherein the mask (20) is synchronized, before the welding zone is reached, by means of recognition marks (19, 21) on a film (13) and on a mask carrier (1).

3. The method as claimed in one of the preceding claims, wherein the laser beam (9) is applied to the films (13, 14) in the region of the welding zone through a circumferential portion of a mask roller (1) rotating about an axis (3) and preferably driven actively.

4. The method as claimed in claim 3, wherein the laser beam (9) is applied to the films (13, 14), downstream of the mask (20), through a transparent pressure roller (2) rotating at the film speed and preferably driven passively.

5. The method as claimed in claim 4, wherein the laser beam (9) is applied to the films (13, 14) through a pressure roller (2) arranged around the mask roller (1).

6. The method as claimed in claim 2, wherein the synchronization of the mask speed with the film speed is carried out by a comparison of the recognition marks (19, 21) and the corresponding regulation of the speed of the masks (20).

7. A device for the mask welding of moved plastic films by means of laser beams, with a laser means (10) and with means for feeding the films (13, 14) into a welding zone, at least one upper pressure roller (6) and one lower pressure roller (2) for pressing together the films (13, 14) at least in the welding zone, wherein the mask (20) is arranged on a mask roller (1) which rotates about the longitudinal axis (3) and the speed of which can be synchronized with the film speed.

8. The device as claimed in claim 7, wherein the mask roller (1) is arranged in one of the pressure rollers (2, 6), the two axes of rotation (3, 4) being parallel to one another or identical, and the circumference of the mask roller (1) being arranged, at least in the region of the welding zone, at the smallest possible distance from the inner circumference of the pressure roller (2) surrounding the mask roller (1) and transparent to the laser beams.

9. The device as claimed in claim 8, wherein the mask roller (1) has recognition marks (21) for the optical detection of the speed, and a control means (28) sets the rotational speed of the mask roller (1) as a function of the comparison of the speeds of the films (13, 14).

## Revendications

1. Procédé pour souder à travers un masque des feuilles de plastique ou de matière synthétique en mouvement (13, 14) au moyen de rayons laser (9), dans lequel une feuille transparente (14) est traversée par le rayon laser (9) et assemblée avec une feuille absorbante (13) en des points définis, le rayon laser (9) étant amené dans une zone de soudage sur les feuilles (13, 14) à travers un masque (20) se déplaçant de manière synchrone avec les feuilles (13, 14), le masque (20) étant placé à distance de la feuille transparente (14) et la vitesse du masque (20) étant réglée au moyen d'un dispositif d'entraînement séparé (5).

2. Procédé selon la revendication 1, **caractérisé par le fait que** le masque (20) est synchronisé au moyen de marques de reconnaissance (19, 21) présentes sur une feuille (13) et un support de masque (1) avant d'atteindre la zone de soudage.

3. Procédé selon l'une des revendications précédentes, **caractérisé par le fait que** le rayon laser (9) est amené au niveau de la zone de soudage sur les feuilles (13, 14) à travers une découpe circonférentielle d'un rouleau de masquage (1) tournant autour d'un axe (3), de préférence entraîné activement.

4. Procédé selon la revendication 3, **caractérisé par le fait qu'**après le masque, le rayon laser (9) est amené sur les feuilles (13, 14) à travers un rouleau de pressage transparent (2), tournant à la vitesse des feuilles, de préférence entraîné passivement.

5. Procédé selon la revendication 4, **caractérisé par le fait que** le rayon laser (9) est amené sur les feuilles (13, 14) à travers un rouleau de pressage (2) placé autour du rouleau de masquage (1).

6. Procédé selon la revendication 2, **caractérisé par le fait que** la synchronisation de la vitesse du masque avec la vitesse des feuilles est réalisée par comparaison des marques de reconnaissance (19, 21) et régulation en conséquence de la vitesse des masques (20).

7. Dispositif pour souder à travers un masque des feuilles de plastique en mouvement au moyen de rayons laser, avec un dispositif laser (10) ainsi que des dispositifs pour amener les feuilles (13, 14) dans une zone de soudage, au moins un rouleau de pressage supérieur (6) et un rouleau de pressage inférieur (2) pour presser l'une contre l'autre les feuilles (13, 14) au moins dans la zone de soudage, **caractérisé par le fait que** le masque (20) est placé sur un rouleau de masquage (1) tournant autour de l'axe longitudinal (3), dont la vitesse peut être synchronisée avec la vitesse des feuilles.

8. Dispositif selon la revendication 7, **caractérisé par le fait que** le rouleau de masquage (1) est placé dans l'un des rouleaux de pressage (2, 6), les deux axes de rotation (3, 4) étant parallèles ou identiques et la circonférence du rouleau de masquage (1) étant située, au moins au niveau de la zone de soudage, à faible distance de la circonférence intérieure du rouleau de pressage (2) transparent aux rayons laser, entourant le rouleau de masquage (1).

9. Dispositif selon la revendication 8, **caractérisé par le fait que** le rouleau de masquage (1) présente des marques de reconnaissance (21) pour la reconnaissance optique de la vitesse et un dispositif de commande (28) qui règle la vitesse de rotation du rouleau de masquage (1) en fonction de la comparaison avec la vitesse des feuilles (13, 14).
